# EUROPEAN PATENT APPLICATION

(11) **EP 1 222 861 A1**
(43) Date of publication of application: **17.07.2002**
(21) Application number: 00204695.1
(22) Date of filing: 22.12.2000
(51) Int. Cl.: A23K 1/16, A23K 1/18

(54) **Preslaughter supplement**

(71) Applicant: Nabuurs Groep B.V., 5443 PR Haps (NL)
(72) Inventor: Nabuurs, Marius Jozef Antonius, 3791 VJ Achterveld (NL)
(74) Representative: Prins, Adrianus Willem

(57) **Abstract**

The invention relates to the effects pre-slaughter stress events such as catching, fastening, fasting and transporting slaughter animals have on post-slaughter characteristics such as slaughter yields and meat texture. The invention provides a method to mitigate or reduce the negative effects of pre-slaughter events comprising providing said animal with a pre-slaughter supplement.

## Description

The invention relates to the effects pre-slaughter stress events such as catching, fastening, fasting and transporting slaughter animals have on post-slaughter characteristics such as slaughter yields and meat texture.
Shortly before slaughter, animals destined for slaughter are suddenly exposed to an array of events that often have negative or detrimental effects on post slaughter meat quality characteristics. For example, poultry for slaughter is normally fasted for about five or more hours prior to catching for transport to the slaughterhouse. The reason for this feed withdrawal is to reduce spoilage of intestinal contents on the carcass during slaughter and thus to reduce faecal contamination of the meat. The Dutch Product Board for Poultry and Eggs (PPE) recommends a feed withdrawal time of five hours before the start of harvesting. In large poultry houses the harvesting can take up to eight hours. Transport and lairage will take another four to five hours. So it is possible that the broilers at the moment of slaughter have had a feed withdrawal period of eight till twenty hours. However, a negative post-slaughter effect of the birds having fasted and having been transported for long hours can for example be reduced slaughter yields and negative influences on meat texture and meat pH. Such animals are often in a negative energy balance, blood glucose concentration decreases, the non-esterified fatty acid (NEFA) concentration increases, and glycogen stores decreases. Also, slaughter animals such as poultry, slaughter pigs or veal calves are often transported over long distances or starved during a long time before reaching the slaughter house, and they often have to remain in waiting for long hours before getting killed. Again, these animals often have fasted or have not been fed prior to their transport and it is not uncommon to observe high stress levels but low energy levels among these animals, levels that further contribute to low meat quality. These high stress levels but low energy levels have been subject on many studies, it has for example been shown that the percentage of animals found dead after transport increases from 0.05% to 0.55% when transport time increases from 4 to 8 hours. The transportation of pigs to the slaughterhouse often comprises a feed withdrawal from 12 hours before transportation; the load and transportation can take 0.5 to 1 hour; finally the pigs will be left for a rest (2-5 hours). If the pigs will be slaughtered abroad the time for transportation from for example the Netherlands varies (Germany: 4 hours; the south of France: 18 hours and Italy: 24 hours). For mature chickens loading will take approximately 1 hour (6500 chickens) and transportation can vary from 30 minutes to 3 hours. The chickens have to wait for another 2 hours before getting slaughtered.
Feed withdrawal should prevent transport-crates and the animals therein against spoilage with faeces (Veerkamp, 1991). Feed withdrawal periods also reduces faecal contamination of the slaughter equipment, and reduces bacterial spoilage of carcasses by direct as well as by cross contamination with intestinal or pathogenic microorganisms (Van der Wal *et al*., 1999). The full digestive tracts are more difficult to remove and breakage may occur (Smidt, *et al*., 1964). Wabeck (1972) recommended a feed withdrawal period between eight to ten hours prior to slaughter to reduce faecal contamination. At that time, the amount of faecal material in the intestine would be minimal, and a translocation of the bacteria from the intestinal tract to the meat would be avoided.
However, if such a feed withdrawal period is taking more then ten hours, it will affect meat-quality aspects such as the processing yield, the tenderness of meat and it will change the concentrations of plasma glucose, non-esterified fatty acid (NEFA), muscle and liver pH, liver size and composition and glycogen concentrations in liver and muscle. Smidt *et al.* (1964) and Wabeck (1972) described the weight losses and overall slaughtering yields, or yields of edible parts as influenced by fasting and transport. The total weight losses during fasting were equal to 0.35% per hour, and the yield reduction of the edible parts (oven ready yield) was 0.24% per hour. To minimise weight losses in the edible parts, broilers should be slaughtered as soon as possible after the withdrawal of feed (Veerkamp, 1978). In 1986, Veerkamp found a weight loss of 0.24% in stead of 0.35%, the reason for this could be the difference in husbandry. In 1986 broilers were kept in pens instead of crates. An effect due to a higher temperature of the microclimate in a crate could be expected (Veerkamp, 1986). Rasmussen and Mast (1989) concluded that birds subjected to feed withdrawal treatments for 18 hours experienced 3.8% shrinkage.
In 1983, Farr *et al.* noted an increasing objective force to shear breast meat as length of increasing withdrawal time. When feed withdrawal time increased from 16 to 24 hours shear values (indicator of tenderness) increased significantly from 5.78 kg/g. to 6.01 kg/g. (Farr *et al*., 1983). The same results were shown by Kotula en Yi Wang (1994). Shear values for breast meat increased from 5.6 kg/g. to 8.9 kg/g., if feed withdrawal times increased from 0 to 36 hours. A less significant increase was found for thigh meat.
Broilers without feed withdrawal gave breast meat with the highest shear values (Lyon *et al.* 1991). Kamus and Farr (1981) have noted that percent moisture decreased with increasing withdrawal times. Although some other researchers, e.g. Rasmussen and Mast (1989), did not found changes in the quality of broiler meat, the results shown above indicate that feed withdrawal has a significant effect on ultimate breast and thigh meat texture.
In an early study Murray and Rosenberg (1953) revealed that the plasma glucose concentration of fasted chickens dropped rapidly and became stabilized after 3 hours of fast. The average values obtained from 3 to 16 hours of fast were not significantly different. Starting feeding again after 16 hours of starvation, the plasma glucose levels of the chickens returned to normal within one hour.
Not only the plasma glucose concentration changes during fasting also the non-esterified fatty acid (NEFA) concentration changes. Langslow *et al.* (1970) noted that the plasma NEFA of six week old chickens rose sharply during the first 7 hours after the start of starvation and reached a maximum around 24 hours.
Glycogen is stored in the liver; the amount changes during fasting. Postmortem, glycogen is converted anaerobically to lactic acid, which causes a decline in pH. When depletion of glycogen occurs antemortem, after feed withdrawal, minimal lactic acid can be formed postmortem, which means that after feed withdrawal, pH values will remain at a high level (Van der Wal *et al*., 1999).
Reductions in live weight, especially associated with losses in carcass yield and the amount of body glycogen reserves, could indicate significant periods of negative energy balance (Warriss *et al*., 1999). Fasting and/or exercise can give changes in the plasma glucose concentration, which can result in comparable changes in glycogen stores in the liver and muscles. Withdrawal of feed had a reducing effect on glycogen concentrations in the *M. biceps femoris* ("red" thigh meat) after 12 hours of deprivation. Ultimate pH was elevated in the *M. biceps femoris* by fasting. Feed withdrawal had no effect on the *M. pectoralis superficialis* ("white" breast meat) (Warriss *et al*., 1988). No detectable glycogen amounts remained in the livers of six-week-old New Hampshire cockerels following 16 hours of fast (Murray and Rosenberg, 1953). Warriss *et al.* (1988) noted negligible concentrations (<1.0 mg/g.) of liver glycogen within 6 hours of food deprivation and the initial pH was elevated.
Feed withdrawal showed also effects on liver size. Broilers exposed to 10 or 24 hours of feed withdrawal had a significant reduced liver size and its fat content. The composition of fatty acids in the liver was changed. Feed withdrawal decreased significantly the concentration of palmitic and oleic acids and increased that of stearic, linoleic and arachidonic acid (Bartov, 1992). Feed withdrawal resulted in higher liver pH, measured 10 min postmortem. The liver pH increased from 6.10-6.20 (no fasting) to 6.6 (after 10 and 12 hours of fasting) (Van der Wal *et al*., 1999).

The invention provides a method to mitigate or reduce an effect of a pre-slaughter event on for example well-being and/or meat-quality of a slaughter animal comprising providing said animal with a pre-slaughter supplement. The pre-slaughter supplement could be given in a solid or (semi)liquid manner. When providing the supplement in a (semi)liquid form, often emulsions are preferred by the animals, especially when ad lib drinking water is provided as well. In a preferred embodiment, such an emulsion comprises a fat-water emulsion, such as can be observed with mayonnaise-like preparations. With a fat-water emulsion any lipid-water mixture is meant that generally can be emulsified. An egg-like taste even further improves the readiness of broilers to consume such a pre-slaughter supplement in sufficient quantity. In a preferred embodiment, such a supplement comprises a pre-slaughter energy drink or emulsion, e.g. drinking water or fat-water-egg emulsion provided with an additional source of energy, such as a carbohydrate or lipid. Alternatively or (preferred) additionally, said animal is provided with a pre-slaughter electrolyte supplement such as an electrolyte drink, e.g. drinking water or emulsion with an additional source of electrolytes to provide a buffer in anticipation of pre-slaughter water and electrolyte loss, or a source of electrolytes separate from drinking water, such as a concentrated salt-solution or salt. The amount of water plus additional supplements for example for a mature chicken should be approximately 10-12.5 ml/hour. Alternatively, the supplement could be given as a solid substance with different types of coatings, so the energy source can be delivered at different time points to the animal's blood. The supplement in solid form could also be given as a powder. Use of such a pre-slaughter supplement as provided herein brings relief to the animals destined for slaughter and/or increases or improves meat-quality characteristics that otherwise are compromised by the in essence stressful pre-slaughter events such as fasting, catching or harvesting and transporting in the hours (in some undesirable cases, especially also from the viewpoint of animal welfare, pre-slaughter periods of one or two days are seen) before the animals reach the slaughterhouse and are slaughtered.
It is herein recognised that since during harvesting and transport to the processing plant, slaughter animals are often deprived of food for several hours, important ingredients of this pre-slaughter supplement are (preferably easily digestible) energy sources such as sugars or carbohydrates, but lipids and fatty acids, as well as proteins, peptides or specific amino acids can be used as energy source as well. Carbohydrate intake provides optimal carbohydrate oxidation influencing the blood glucose concentration. The oxidation time of glucose, polymers of glucose, maltose, sucrose and soluble starch after oral intake are essentially the same. The oxidation time of fructose and galactose is slower than the others, these compounds are preferably also included in the supplement as provided herein when longer periods of fasting are anticipated.
The amount of energy in an aqueus or solid pre-slaughter supplement depends on the energy need of the slaughter animal and may be calculated accordingly. For example, broilers need 450 kJ/kg metabolic weight per day. A heavy broiler weights approximately 2500 gram, so the required amount of energy equals 450x(2.5)^{0.75}=895 kJ/day. (similar calculations can be made for other animals such as pigs or calves) When a pre-slaughter supplement must give energy for, for example, 18 hours, the energy requirements equal (18/24)x895kJ. Actually, there is no real theoretical upper limit, from the perspective of the requirements of the animal the energy source can not be concentrated enough and the supplement as provided herein can thus be also provided as a dry or semi-dry composition (provided sufficient water is also provided). The upper limits of the amount of energy in the drink will be mostly likely be provided by practical aspects such as the desired viscosity of the drink or emulsion or too high costs of adding the energy source. It is herein considered desirable to provide an animal destined for slaughter with a pre-slaughter supplement to let the animal preferably cope better with stressful and/or energy depleting pre-slaughter events, preferably of course under circumstances wherein pre-slaughter periods are kept as short as possible, than meat-quality characteristics may be best safe-guarded as well. Other ingredients in the supplement can be vitamins, amino acids and minerals. In particular glucose (for example at 1 to 25%, preferably at 2 to 10% w/v, such as at 3% or 5%) and vitamin C can be supplemented in a drink, emulsion or solid supplement to reduce pre-slaughter stress and so to increase yields. An added advantage is that glucose can help relieve heat stress, however, heat stress during transport is generally better met by appropriate temperature control and/or ventilation during transport. Other specific compounds comprise creatine, proteins or peptides (an amino acid source), other vitamins and salts as electrolyte supply. Yet other supplements comprise iron and lipids and fatty acids such as fish oils or MCT's. Free fatty acids in the blood are the most important fat source. The use of Medium Chain Triglycerids (MCT's), preferably as a lipid component of an emulsion, increases the free fatty acid level and stimulates the use of fat stores and therefore saves the glycogen stores. Pardue and Thaxton (1986) reviewed the role of ascorbic acid (Vitamin C) in poultry. Creatine is necessary to form phosphocreatine, an energy source used for acute needs. Depending on the time needed for catching, loading and transportation of a slaughter animal the starvation period varies. The invention therefor provides several differentiated pre-slaughter supplements, each suitable for certain time period wherein fasting is expected. For immediate needs, e.g for the first six hours after the start of starvation, such a pre-slaughter supplement as provided herein can preferably comprise readily digestible energy sources such as, monosaccarides (for example glucose and fructose), amino acids (for example L-phenylalanin and L-tyrosin) and short chain fatty acids. For intermediate needs, e.g. from five till twelve hours after starvation, requirements are better met by a suppplement as provided herein comprising disaccharides (for example lactose, maltose and sucrose) and trisaccharides, di- and tripeptides and medium chain fatty acids. For long-term needs, from ten or twelve hours after the start of starvation on, requirements are best met by a suppplement as provided herein comprising polysaccharides (for example starch and dextran), polypeptides, long-chain fatty acids and fats for energy delivery. In all three cases addition of minerals (for example chloride, sodium, potassium, calcium, magnesium, phosphorus and iron), vitamins (for example C, E, B₆, B₁ and B₁₂) and salts (for example NaCl, KPO₄ and CaPO₄) is preferred, to better activate small intestinal absorption. Taste and flavour substances can be added to stimulate the slaughter animal to drink the pre-slaughter supplement.

### Experimental Design

Slaughter animals, such as broilers are divided into several groups. After the last meal on the day of slaughter the animals are fasted for a distinct pre-slaughter period, such as anywhere between 3 to 36 hours before slaughter. Of course, exceptionally, longer pre-slaughter periods are in place, that have specific requirements which are however also studied as provided herein. During this period the animals are getting access to a pre-slaughter supplement, such as a pre-slaughter drink as provided herein. Supplements may comprise a nutritional energy source, such as carbohydrates, vitamin C, amino acids (methionin, lysin) and MCT's. Nutritional energy is easily determined by a method as known in the art, e.g. in a combustion chamber, or by calculation based on known nutritional energy levels of the particular constituents of the supplement and generally expressed in calories or kilojoules, supplements may also comprise an electrolyte source, such as a salt.
Measurements is at different times. For example a first measurement is taken prior to supplementation (T = 0 h.), a second 30 minutes after the end of supplementation (T= 6,5 h.) and a further one 13 hours after the start of feed withdrawal (T=13 h.)
Parameters that are measured are blood glucose concentration, NEFA concentration, lactate concentration and corticosterone level. The glycogen stores are measured. Finally the meat quantity and quality is diagnosed by measuring the slaughter yields, the pH, the moisture and the force to shear for example breast and thigh meat.

Useful supplements (here only the aqueous version is given but emulsions can easily be made, preferably by using an emulsifier generally known in the field of food technology, such as lecithine or egg-proteins and the like) are for example:

### Supplement 1

Water, Sacharose, Maltodextrine, Grapesugar, Lactose, Dietary acids (Citric acid), Minerals, Pigments (caroteen, carminic acid), Anti-oxydant (ascorbic acid)

### Supplement 2

Water, Sacharose, Maltodextrine, Minerals, Dietary acids (Citric acid), Vitamins (C and E), Cholin, Amino acids (tryptophane, taurin, L-fenylalanin, L-tyrosin), Caffein, Inositol, Pigments (caroteen)

### Supplement 3

Water, L-Carnitine, Choline, Inositol, Chromium Picolate, Vitamin B6 (pyridoxin HCl), Phenylalanin, Sodium benzoate, Kalium sorbate, Citric acid, Taste and flavour substances

### Supplement 4

Water, Sugar, Glucose, Aromatics, Nutritive acids, Citric acid, Minerals (Chloride, Sodium, Potassium, Calcium, Magnesium, Phosphorus, Iron

### Supplement 5

Water, Fruit juice (orange, grapefruit/apple), Sugar, Glucose, Acidity control, Citric acid, Preservatives, Vitamin C, E, B₆, B₁, B12, Niacin, Panthotanic acid, Biotin, Antioxidant, Flavours,

### Supplement 6

Water, Sugar, Acidity control, Salts (NaCl, KPO₄, CaPO₄), Anti oxydant, Stabilizer, Flavour, Pigmets (alpha-Caroteen),

Supplements are preferably further supplemented with), di-, tri-, and polysaccharides (for example starch), di-, tri-, or polypeptides, short-, medium- or long-chain fatty acids MCT's, fat's, and preferably with:
I. mono-saccharides, amino acids and/or short chain fatty acids when preparing a pre-slaughter supplement for the first six hours after the start of starvation
II. di- and trisaccharides, di- and tripeptides and/or medium chain fatty acids when preparing a pre-slaughter supplement for from five till twelve hours after starvation
III. polysaccharides (for example starch), polypeptides, long-chain fatty acids and/or MCT's or fats when preparing a pre-slaughter supplement for energy delivery from ten till about twenty four hours after the start of starvation

### References

Bartov, I., 1992. Effect of feed withdrawal on yield, fat content and fatty acid composition of various tissues in broilers. Pages 195-199 in: *Proceedings European Symposium of the World's Poultry Science Association*, ed. Amsterdam, Netherlands.

Farr, A.J., E.H. Atkins, L.J. Stewart and L.C. Loe, 1983. The effect of withdrawal periods on tenderness of cooked broiler breast and thigh meats. *Poultry Science* 62:1419. (Abstr.)

Kamus, N.L. and A.J. Farr, 1981. Withdrawal and haul effects on moisture uptake, retention, and intestinal content scores. *Poultry Science* 60:1604. (Abstr.)

Kotula, K.L. and Yi Wang, 1994. Characterization of broiler meat quality factors as influenced by feed withdrawal time. *Journal Appl. Poultry Res.* 3:103-110.

Langslow, D.R., E.J. Butler, C.N. Hales and A.W. Pearson, 1970. The response of plasma insulin, glucose and non-esterified fatty acids to various hormones, nutrients and drugs in the domestic fowl. *Journal of Endocrinology* 46:243-260.

Lyon, C.E., C.M. Papa, and R.L. Wilson JR., 1991. Effect of feed withdrawal on yields, muscle pH, and texture of broiler breast meat. *Poultry Science* 70:1020-1025.

Murray, H.C., and M.M. Rozenberg, 1953. Studies on blood sugar and glucogen levels in chickens. *Poultry Science* 32:805-811.

Pardue, S.L. and J.P. Thaxton, 1986. Ascorbic Acid in Poultry: a Review. *World's Poultry Science Journal* 42(2): 107-123.

Rasmussen, A.L. and M.G. Mast, 1987. Effect of feed withdrawal on composition and quality of broiler meat. *Poultry Science* 68:1109-1113.

Smidt, M.J., S.D. Formica and J.C. Fritz, 1964. Effect of fasting prior to slaughter on yield of broilers. *Poultry Science* 43:931-934.

Veerkamp, C.H., 1978. The influence of fasting and transport on yields of broilers. *Poultry Science* 57:634-638.

Veerkamp, C.H., 1986. Fasting and yield of broilers. *Poultry Science* 65:1299-1304.

Veerkamp, C.H., 1991. *Rapportage nuchter afleveren van slachtkuikens.* COVP-DLO Het Spelderholt, Beekbergen.

Wabeck, C.J., 1972. Feed and water withdrawal time relationship to processing yield and potential fecal contamination of broilers. *Poultry Science* 51:1119-1121.

Wal, P.G. van der, H.G.M. Reimert, A. Goedhart, B. Engel and T.G. Uijttenboogaart, 1999. The effect of feed withdrawal on broiler blood glucose and nonesterified fatty acid levels, postmortem liver pH values, and carcass yield. *Poultry Science* 78:569-573.

Warris, P.D., S.C. Kestin, S.N. Brown and E.A. Bevis, 1988. Depletion of glycogen reserves in fasting broiler chickens. *British Poultry Science* 29:149-154.

Warris, P.D., T.G. Knowles, S.N. Brown, J.E. Edwards, P.J. Kettlewell, M.A. Mitchell and C.A. Baxter, 1999. Effects of lairage time on body temperature and glycogen reserves of broiler chickens held in transport modules. *Veterinary Record* 145:218-222

## Claims

1. A method to prevent or reduce an effect of a pre-slaughter event on a slaughter animal comprising providing said animal with a pre-slaughter supplement.

2. A method according to claim 1 wherein said pre-slaughter event comprises transportation of said animal.

3. A method according to claim 1 or 2 wherein said supplement comprises a source of nutritional energy.

4. A method according to anyone of claims 1 to 3 wherein said supplement comprises a source of electrolytes.

5. A method according to anyone of claims 1 to 4 wherein said supplement comprises a fat-water emulsion.

6. A composition suitable and designed for use as pre-slaughter supplement comprising a source of nutritional energy.

7. A composition according to claim 6 comprising a fat-water emulsion

8. Use of a composition comprising a source of nutritional energy and/or electrolytes for the preparation of a pre-slaughter supplement for the prevention or reduction of an effect of a pre-slaughter event on a slaughter animal.
